# EUROPEAN PATENT APPLICATION

(11) **EP 0 590 771 A2**
(43) Date of publication of application: **06.04.1994**
(21) Application number: 93306270.5
(22) Date of filing: 09.08.1993
(51) Int. Cl.: G06F 1/24

(54) **Method for resetting a system**

(30) Priority: 01.10.1992 JP 284985/92
(71) Applicant: HUDSON SOFT CO., LTD., Sapporo-shi, Hokkaido 062 (JP)
(72) Inventor: Takano, Toshiya, c/o Hudson Soft Co., Ltd., Sapporo-shi, Hokkaido (JP)
(74) Representative: Brunner, Michael John

(57) **Abstract**

In an information processing system including a CPU and peripheral IC apparatus, reset signals are supplied from the CPU to the peripheral IC apparatus, after the CPU is completely reset.

## Description

This invention relates to a method for resetting a system in an information processing apparatus.

Considering a hardware structure in an information processing apparatus, a case where a CPU solely operates is seldom found. In an ordinary case, a CPU operates together with other IC apparatus having various functions. For this reason, reset signals are supplied to the CPU and the other IC apparatus simultaneously to initialize a whole hardware.

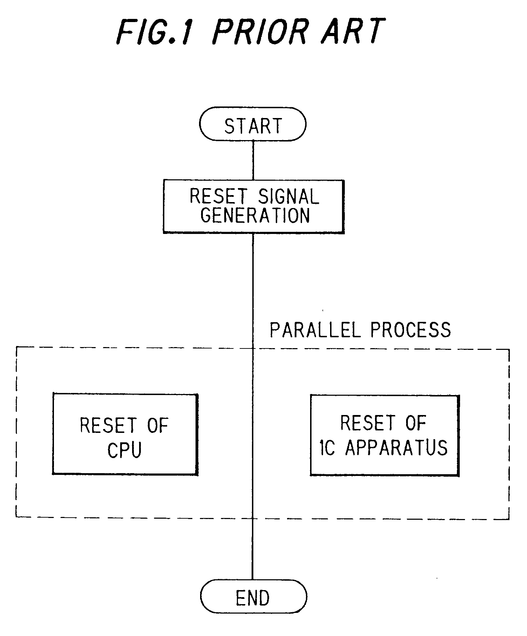

Fig. 1 shows a conventional method for resetting a system, wherein reset signals are supplied in parallel to a CPU and other IC apparatus. In the conventional method, a reset time is shorten, while the precision of the reset operation is lowered. In this reset operation, it is not known which one is first completed to be reset among the CPU and the other IC apparatus.

According to the conventional method, a whole system does not work properly, even if only one of the CPU and the other IC apparatus is not reset. Especially if the CPU is not reset, the system runs in a violation manner to result in unexpected accident.

In the accompanying drawings:-
Accordingly, it is an object of the invention to provide a method for resetting a system in which the violation-run of a CPU to be caused by the non-resetting of the CPU is avoided.

According to the invention, a method for resetting a system, comprises the steps of:
supplying a CPU with a reset signal; and
supplying IC apparatus with reset signals in parallel, after the CPU is completely reset, the system comprising the CPU and the IC apparatus.

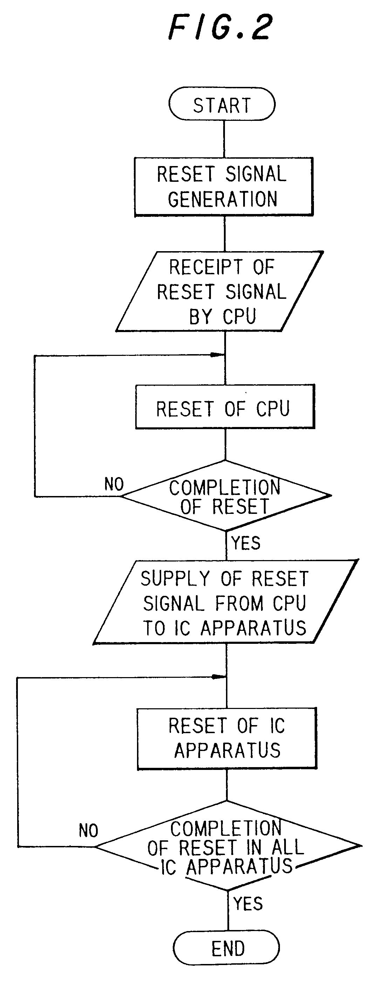

In the invention, when a CPU receives a reset signal, the CPU starts resetting, and, when the resetting is completed in the CPU, reset signals are supplied from the CPU to other IC apparatus, as shown in Fig. 2. That is, no reset signal is supplied to the other IC apparatus, before the CPU is completely reset.

The invention will be explained in more detail in conjunction with appended drawings, wherein :
Fig. 1 is a flow chart of a conventional method for resetting a system;
Fig. 2 is a flow chart of a method for resetting a system in a preferred embodiment according to the invention; and
Fig. 3 is a block diagram showing a voice and image processing apparatus in the preferred embodiment.

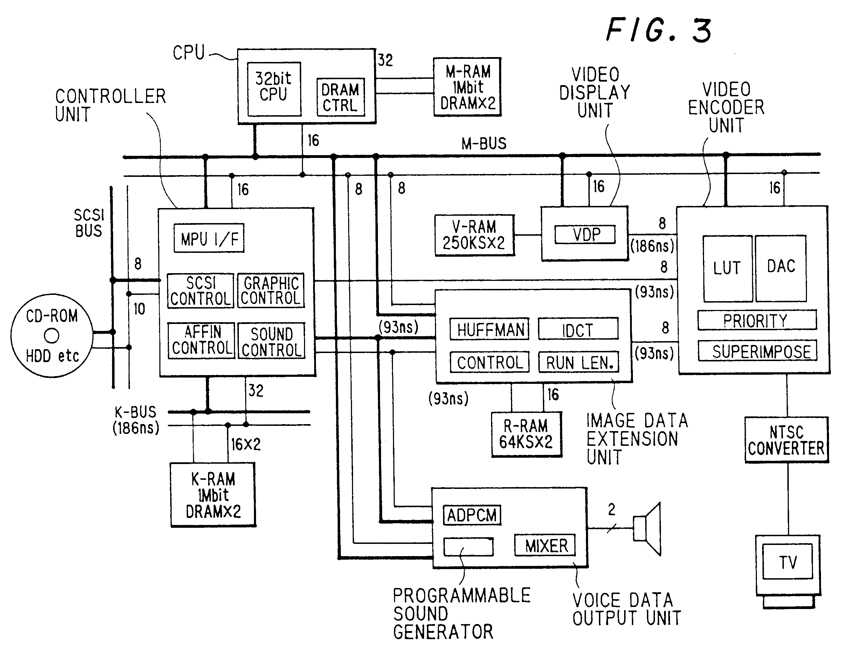

Fig. 3 shows a voice (sound) and image processing apparatus in the preferred embodiment, wherein a CPU controls plural IC apparatus represented by rectangle blocks.

This processing apparatus comprises a game soft storing medium, such as CD-ROM, etc., a CPU of 32 bits, a control unit for transfer-control of image and voice data and for interface of each apparatus, an image data extension and transformation unit, an image data output unit, a voice data output unit, a video encoder unit, a video display unit, etc. Each unit is an IC apparatus, and has a memory such as K-RAM, M-RAM, R-RAM, V-RAM, etc.

The CPU has a memory control function for controlling the DRAM via a memory support, an I/O control function for communicating with various peripheral devices via I/O ports, and an interruption control function, and is provided with a timer, parallel input and output ports, etc.

The video display unit reads display-data written into the V-RAM by the CPU, and the read data is supplied to the video encoder unit to be displayed on the screen.

The controller unit has a built-in SCSI controller, into which image and voice data are supplied from an external memory apparatus such as the CD-ROM, etc. via a SCSI interface. The supplied data are once buffered in the K-RAM.

The priority of background image data for natural picture is determined in the controller unit to be supplied to the video encoder unit by one dot data unit.

Data-compressed motion picture (full color, pallet) data is supplied to the image data extension unit. The image data extension unit extends the data, and the extended data is supplied to the video encoder unit.

The video encoder unit carries out the process such as super-impose, color pallet regeneration, special effect, D/A conversion, etc. on data of VDP image, natural picture background image, and motion picture (full color, pallet) supplied from the video display unit, the controller unit, and the image data extension unit, and image signals encoded to be NTSC signals by the NTSC converter are supplied to the screen.

ADPCM video data read from the CD-ROM, etc. is buffered in the K-RAM in the same manner as image data, and is supplied to the video data output unit to be reproduced therein by the controller unit.

In the processing apparatus as described above, if the CPU fails to be reset, and the other IC apparatus are reset, the voice data output unit operates independently, so that sound continues without any control. On the other hand, only when the CPU is reset, reset signals are supplied from the CPU to the other IC apparatus in the preferred embodiment, such violation-run thereof never occurs.

As described above, the violation-run of other IC apparatus caused by no-control of a CPU never occurs in the invention. For this control, precise resetting operation is carried out. Especially, the invention is very advantageous in an apparatus including a voice (sound) output unit consuming an excessive power due to the violation-run of a CPU.

Although the invention has been described with respect to specific embodiment for complete and clear disclosure, the appended claims are not to be thus limited but are to be construed as embodying all modification and alternative constructions that may occur to one skilled in the art which fairly fall within the basic teaching herein set forth.

## Claims

1. A method for resetting a system, comprising the steps of:
supplying a CPU with a reset signal; and
supplying IC apparatus with reset signals in parallel, after said CPU is completely reset, said system comprising said CPU and said IC apparatus.

2. A method for resetting a system, according to claim 1, wherein:
said system is a voice and image processing system; and
said IC apparatus includes a voice output unit, said voice output unit being avoided in violative generation of voice.
